# EUROPEAN PATENT SPECIFICATION

(11) **EP 2 790 483 B1**
(45) Date of publication and mention of the grant of the patent: **03.03.2021**
(21) Application number: 12735808.3
(22) Date of filing: 26.06.2012
(51) Int. Cl.: A01B 59/00, A01B 59/043, A01B 59/06

(54) **LINK HOLDER ON A VEHICLE OR MACHINE**
BEZUG HALTER AUF EINEM FAHRZEUG ODER EINER MASCHINE
SUPPORT LIAISON SUR UN VEHICULE OU MACHINE

(30) Priority: 15.12.2011 GB 201121552
(43) Date of publication of application: 22.10.2014
(73) Proprietor: AGCO International GmbH, 8212 Neuhausen am Rheinfall (CH)
(72) Inventor: STICH, Ulrich, 87662 Blonhofen (DE); SCHMITT, Michael, 81476 München (DE); KOETTERITZSCH, Thomas, 87616 Marktoberdorf (DE)
(74) Representative: Smith, Louise Marie
(86) International application number: PCT/EP2012/062373
(87) International publication number: WO 2013/087233

(56) References cited:
- EP-A1- 1 982 854
- DE-C1- 3 839 506
- DE-C1- 3 839 522
- GB-A- 2 217 169
- US-A- 2 755 722

## Description

This invention relates to a link holder on a vehicle or machine. More specifically, this invention relates to a top link holder on a vehicle, or machine.

Vehicles, or machines such as agricultural tractors and agricultural machines are provided with hitch devices to enable an implement to be attached to them.

On an agricultural tractor for example, a top link holder is provided which can facilitate the handling of a top link of a three-point-hitch device on the rear of a tractor. The top link is pivotally attached to the tractor to allow movement about a horizontal axis. Movement about a vertical axis may also be possible. If the top link is not in use a top link holder holds the top link in a parking position which is a substantially vertical position so that it cannot move about the vertical or horizontal axis. If the operator has to couple the top link to an implement, the top link is released from the holder and the top link is pulled downwards to a coupling point of the implement. The top link is heavy and if the operator drops the top link during coupling the link can cause damage to the operator or a part of the tractor, or be damaged itself.

Typically, top link holders comprise a crude metal rod fixed to a part of the tractor and which extends in a substantially vertical direction. The rod is provided with a simple securing mechanism to secure the top link to the rod in the parking position. To release the top link, the securing mechanism is released and the operator pulls and supports the top link to lower it safely.

It is an aim of the present invention to provide an improved link holder which improves the safety of moving the link.

According to the invention there is provided a link holder for controlling movement of a pivotable top link on a vehicle or machine, wherein said holder has an arm comprising two elements moveable relative to each other, wherein a first element is pivotably attachable to the vehicle, or machine and the second element is attachable to the top link, wherein said holder comprises a control means to control movement of the top link, wherein the control means is pivotably connected between the vehicle or machine and the first element, characterised in that said control means is biased towards an extended position in which the top link is held in a substantially vertical position, wherein the holder further comprises a stabilising element connecting first and second elements to hold the top link in position, the stabilising element comprising a rod which is pivotably attached at one end to the first or second element and attachable to either the first or second element at the other end.

A link holder according to the preamble of attached claim 1 is described in United States patent US 2,755,722.

Preferably, the control means comprises spring means. The spring means may be for example a gas spring, a torsion spring, or a compression spring. The control means is preferably biased to pivot the link to a substantially vertical position.

The control means is connected between the vehicle, or machine and the first element. In this way movement of the control means pivots the first element and thus moves the second element.

The link holder preferably comprises a fastening means, so that when it is in a parking position it can be securely fastened to the vehicle or machine to prevent movement of it when the vehicle or machine is travelling.

The link holder comprises a stabilising element to hold the top link in position when changing the attachment position of the link on the vehicle or machine. This way the link can be easily disconnected from the vehicle or machine at one end whilst the other end is still connected to the link holder, thus supporting some of the weight of the link whilst its position on the vehicle or machine is changed.

The first element may be provided with more than one connection point for attachment to the machine or vehicle. This way the top link can be fitted at a higher, or lower position on the machine or vehicle depending on the implement to be attached. Preferably the vehicle is an agricultural tractor.

The invention will now be described, by way of example only, with reference to the following drawings in which:
Figure 1 shows a side view of a top link holder mounted to a vehicle or machine in accordance with the invention in which the top link is held in a parking position,
Figure 2 is a side view of the top link holder of figure 1 in which the top link is in a coupling position,
Figures 3 and 4 are further side views of the top link holder in the coupling position.

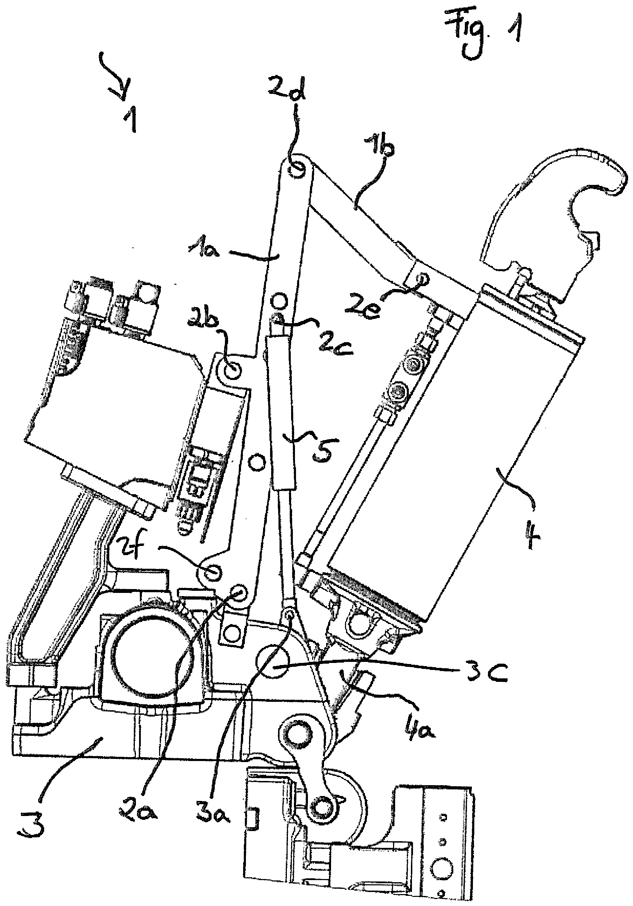

Figure 1 shows a top link holder 1 mounted to a machine or vehicle, such as an agricultural tractor (not shown). The holder 1 is holding the top link 4 in a parking position. Top link 4 is pivotally attached to the tractor frame 3 at pivot joint 4a so that it can be moved about a horizontal axis and a vertical axis. In the parking position, the top link 4 is held in a substantially vertical position and no further upward movement of the link is possible. The top link 4 may be part of a three point linkage attached to the rear of a tractor.

The top link holder 1 consists of two elements, a first element 1a and a second element 1b. The first element is pivotably attached to the tractor frame at connection point 2a to move about a horizontal axis. The two elements 1a and 1b are movably connected to each other at joint 2d. Second element 1b is moveably and detachably connected to the top link 4 at link connection point 2e. A bolt secures connection connection point 2a and joint 2d to the tractor and top link respectively. The link holder 1 may also be described as being in a parking position when it is attached to, or detached from the link 4 and element 1a is in a substantially vertical position as shown in figure 1.

The top link 4 is pivotally mounted to the tractor 3 by a pivot joint 4a attached to connection point 3b by a bolt.

One end of gas spring 5 is pivotably connected to the first element 1a at connection point 2c and the other end is pivotably attached to the vehicle frame 3 at pivot point 3a.

Alternatively, other spring means, such as a torsion spring, or a compression spring could be used instead of gas spring 5.

The gas spring 5 is biased towards an extended position and therefore keeps the top link holder 1 and thus the attached top link 4 in the parking position.

To further secure the top link holder 1 in the parking position for travel, the top link holder 1 can be by secured to a part of the tractor by fastening means 2b.

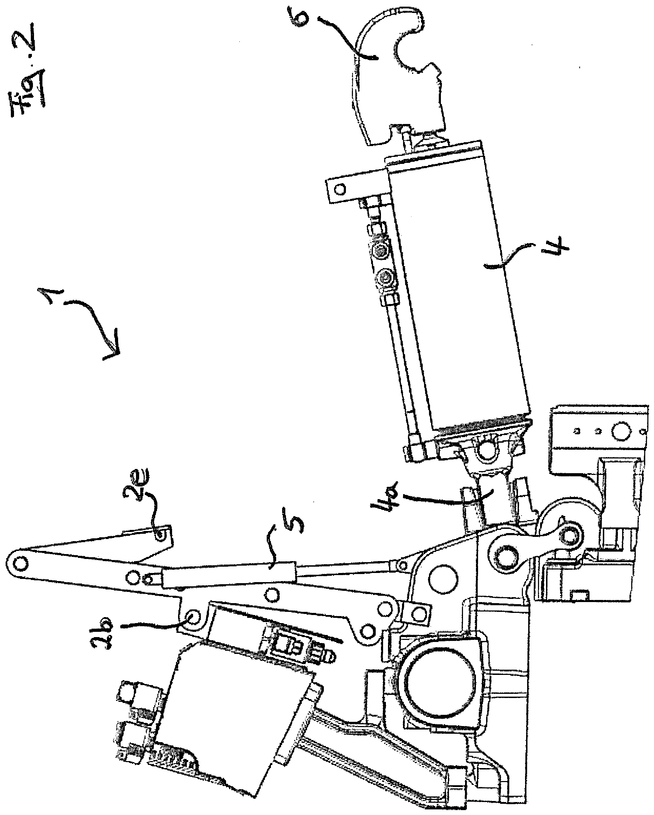

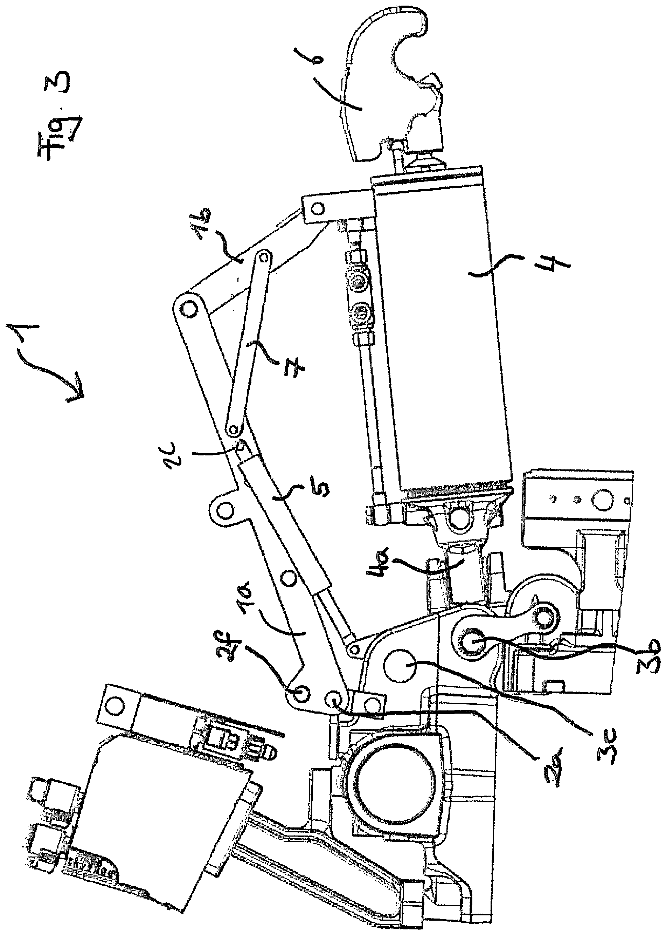

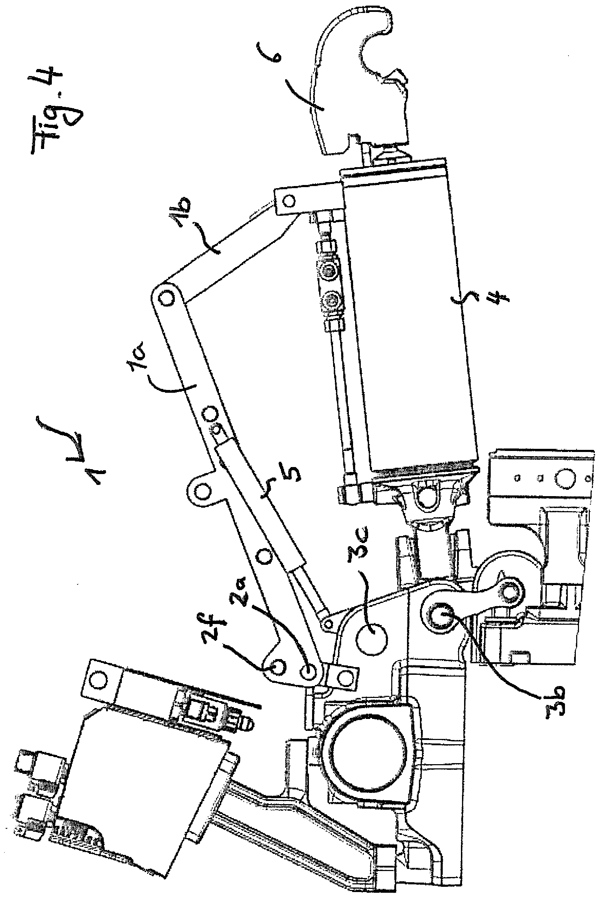

As shown in figure 2, when in a coupling position, the top link 4 is in a substantially horizontal position for coupling an implement to hook 6 of the top link 4. The holder can also be described as being in a coupling position when elements 1a and 1b are substantially at right angles to each other as shown in figures 3 and 4.

To move the top link 4 from a parking position to a coupling position, the operator releases fastening means 2b and exerts a downwards force on the top link 4 to move the top link 4 and holder 1 to the coupling position. The downwards force overcomes the force of the gas spring 5 which acts in the direction towards the parking position. If the operator drops the top link 4, the gas spring 5 exerts a force on first element 1a drawing the holder 1 and thus the top link 4 to the parking position. In this way, the top link 4 cannot fall further down, thus safeguarding the operator, the top link and anything in the vicinity of the top link 4 from damage.

When the top link is in the coupling position, the operator can then couple an implement to the top link. When coupled, the second element 1b is disconnected from the top link 1 at link connection point 2e by removing the bolt. The force of the gas spring 5 acting on the first element pulls first element 1 a and therefore second element 1b back to the upright parking position away from the top link as shown in figure 2. The first element can then be secured to the tractor by fastening means 2b.

Figures 3 and 4 show further views of the holder 1 and top link 4 in the coupling position. In figure 3, a stabilising element 7 connects first and second elements to hold the top link in position. Stabilising element 7 comprises a rod which is pivotably attached at one end to the first element 1a or second element 1b and attachable to either the first element 1a or second element 1b at the other end.

In some cases, for example when the top link 4 is used with different implements, it is necessary to change the position of the top link 4. The top link holder 1 can also be moved and is used to support the position change of the top link 4 if it is kept in the coupling position. For the position change connection points 3b and 3c are provided on the vehicle frame 3. The pivot joint 4a is mounted on the vehicle frame, for example by a bolt. As shown in figure 3, first element 1a is provided with a further connection point 2f When in a supported coupling position, that is when the second element 1b is still attached to the top link, the top link 4 can be supportably moved from connection point 3b to connection point 3c. Normally, the top link holder 1 moves back to the parking position if no downwards force is exerted on the top link 4. If stabilising element 7, or a spring means (not shown) is connected between first and second elements as shown in figure 3, no movement of the first and second elements is possible and the change of position of the top link 4 can be easily made whilst part of the weight of the link is supported by the holder 1.Further, it is possible to move first element 1a from connection point 2a to connection point 2f on the vehicle frame 3 so that the top link can still be held in a substantially vertical parking position if the top link is attached at connection point 3c. If the operator drops the end of the top link 4 closest to the tractor, the top link will not crash to the ground but pivot about link connection point 2e.

Once the top link position has been changed, the stabilising element 7 can be pivoted back so that it no longer connects the first and second elements 1a, 1b (figure 4) allowing the holder 1 and top link 4 to return to the parking position. If it is necessary to adjust the position of the holder 1, the first element 1a can be moved so that connection point 2f is connected to the tractor instead of connection point 2a.

## Claims

1. Link holder (1) for controlling movement of a pivotable top link (4) on a vehicle or machine, wherein said holder (1) has an arm comprising two elements (1a, 1b) moveable relative to each other, wherein a first element (1a) is pivotably attachable to the vehicle or machine and the second element (1b) is attachable to the top link (4), wherein said holder (1) comprises a control means (5) to control movement of the top link (4), wherein the control means (5) is pivotably connected between the vehicle or machine and the first element (1a) **characterised in that** said control means (5) is biased towards an extended position in which the top link (4) is held in a substantially vertical position, wherein the holder (1) further comprises a stabilising element (7) connecting first and second elements (1a, 1b) to hold the top link (4) in position, the stabilising element (7) comprising a rod which is pivotably attached at one end to the first or second element (1a, 1b) and attachable to either the first or second element (1a, 1b) at the other end.

2. Link holder as claimed in claim 1 wherein the control means (5) comprises spring means.

3. Link holder as claimed in any preceding claim wherein the link holder comprises a fastening means (2b) for fastening it to the machine or vehicle.

4. Link holder as claimed in any preceding claim wherein the first element (1a) is provided with more than one connection point (3b, 3c) for attachment to the vehicle.

5. Link holder as claimed in any preceding claim for use on an agricultural tractor.

## Patentansprüche

1. Lenkerhalter (1) zum Steuern einer Bewegung eines schwenkbaren Oberlenkers (4) an einem Fahrzeug oder einer Maschine, wobei der Halter (1) einen Arm mit zwei Elementen (1a, 1b) besitzt, die relativ zueinander beweglich sind, wobei ein erstes Element (1a) schwenkbar an dem Fahrzeug oder der Maschine und das zweite Element (1b) an dem Oberlenker (4) befestigbar ist, wobei der Halter ein Steuermittel (5) zum Steuern der Bewegung des Oberlenkers (4) aufweist, wobei das Steuermittel (5) schwenkbar zwischen dem Fahrzeug oder der Maschine und dem ersten Element (1a) angeschlossen ist, **dadurch gekennzeichnet, dass**
das Steuermittel (5) in Richtung einer ausgefahrenen Position beaufschlagt ist, in der der Oberlenker in einer im Wesentlichen vertikalen Position gehalten ist, wobei der Halter (1) weiterhin ein Stabilisierungselement (7) aufweist, das das erste Element (1a) und das zweite Element (1b) verbindet, um den Oberlenker (4) in Position zu halten, wobei das Stabilisierungselement (7) eine Stange aufweist, die an ihrem einem Ende schwenkbar an dem ersten Element (1a) oder dem zweiten Element (1b) befestigt und an ihrem anderen Ende an dem ersten Element (1a) oder dem zweiten Element (1b) befestigbar ist.

2. Lenkerhalter nach Anspruch 1, wobei das Steuermittel (5) ein Federmittel aufweist.

3. Lenkerhalter nach mindestens einem der vorhergehenden Ansprüche, wobei der Lenkerhalter ein Befestigungsmittel (2b) zum Befestigen des Lenkerhalters an der Maschine oder dem Fahrzeug aufweist.

4. Lenkerhalter nach mindestens einem der vorhergehenden Ansprüche, wobei das erste Element (1a) mit mehr als einem Verbindungspunkt (3b, 3c) für eine Befestigung an dem Fahrzeug versehen ist.

5. Lenkerhalter nach mindestens einem der vorhergehenden Ansprüche für eine Verwendung in einem landwirtschaftlichen Traktor.

## Revendications

1. Support de biellette (1) destiné à commander le mouvement d'une biellette supérieure pouvant pivoter (4) sur un véhicule ou une machine, dans lequel ledit support (1) comporte un bras comprenant deux éléments (1a, 1b) pouvant se déplacer l'un par rapport à l'autre, dans lequel un premier élément (1a) peut être fixé de manière à pouvoir pivoter sur le véhicule ou la machine et le second élément (1b) peut être fixé sur la biellette supérieure (4), dans lequel ledit support (1) comprend un moyen de commande (5) destiné à commander le mouvement de la biellette supérieure (4), dans lequel le moyen de commande (5) est raccordé de manière à pouvoir pivoter entre le véhicule ou la machine et le premier élément (la), **caractérisé en ce que** ledit moyen de commande (5) est appliqué vers une position étendue dans laquelle la biellette supérieure (4) est maintenue dans une position sensiblement verticale, dans lequel le support (1) comprend, en outre, un élément de stabilisation (7) reliant les premier et second éléments (1a, 1b) afin de maintenir la biellette supérieure (4) en position, l'élément de stabilisation (7) comprenant une tige qui est fixée de manière à pouvoir pivoter au niveau d'une première extrémité au premier ou second élément (1a, 1b) et peut être fixée soit sur le premier soit sur le second élément (1a, 1b) au niveau de l'autre extrémité.

2. Support de biellette selon la revendication 1 dans lequel le moyen de commande (5) comprend un moyen élastique.

3. Support de biellette selon l'une quelconque des revendications précédentes dans lequel le support de biellette comprend un moyen de fixation (2b) afin d'assurer sa fixation sur la machine ou le véhicule.

4. Support de biellette selon l'une quelconque des revendications précédentes dans lequel le premier élément (1a) comporte plus d'un point de couplage (3b, 3c) afin d'assurer la fixation sur le véhicule.

5. Support de biellette selon l'une quelconque des revendications précédentes destiné à une utilisation sur un tracteur agricole.
